(19) Europäisches Patentamt
European Patent Office
Office européen des brevets

(11) EP 3 932 872 A2

(12) **EUROPEAN PATENT APPLICATION**

(43) Date of publication:
**05.01.2022 Bulletin 2022/01**

(21) Application number: **21182945.2**

(22) Date of filing: **30.06.2021**

(51) Int Cl.:
*C01G 53/00* *(2006.01)* *H01M 4/505* *(2010.01)*
*H01M 4/525* *(2010.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2020 KR 20200080492**

(71) Applicant: **Samsung SDI Co., Ltd.**
**Yongin-si, Gyeonggi-do 17084 (KR)**

(72) Inventors:
- **CHAE, Youngjoo**
**17084 Yongin-si (KR)**
- **KANG, Gwiwoon**
**17084 Yongin-si (KR)**
- **KONG, Youngsun**
**17084 Yongin-si (KR)**
- **KIM, Sangmi**
**17084 Yongin-si (KR)**
- **KIM, Youngki**
**17084 Yongin-si (KR)**
- **KIM, Jinyoung**
**17084 Yongin-si (KR)**
- **JEONG, Jaeyoung**
**17084 Yongin-si (KR)**
- **HONG, Soonkie**
**17084 Yongin-si (KR)**

(74) Representative: **Shearman, James Ward**
**Marks & Clerk LLP**
**15 Fetter Lane**
**London EC4A 1BW (GB)**

# (54) NICKEL-BASED LITHIUM METAL COMPOSITE OXIDE, PREPARING METHOD THEREOF, AND LITHIUM SECONDARY BATTERY INCLUDING POSITIVE ELECTRODE INCLUDING THE SAME

(57) Disclosed herein are a nickel-based lithium metal composite oxide, a method of preparing the same, and a lithium secondary battery including a positive electrode including the same. The nickel-based lithium metal composite oxide includes secondary particles including aggregates of primary particles, wherein a content of nickel in the nickel-based lithium metal composite oxide is 50 mol% or more, based on the total content of transition metals in the nickel-based lithium metal composite oxide, the secondary particles include large secondary particles having a particle size of 10 μm or more and small secondary particles having a particle size of 5 μm or less, and the content of nickel in the large secondary particles is larger than the content of nickel in the small secondary particles.

FIG. 1

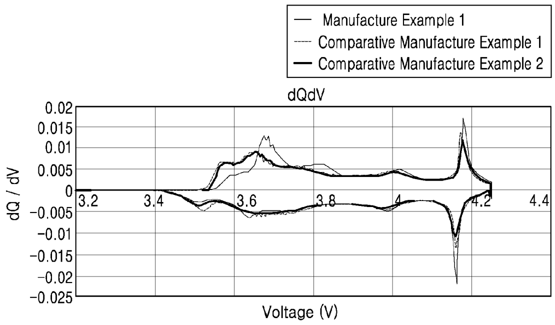


EP 3 932 872 A2

## Description

## BACKGROUND

### 1. Field

One or more embodiments of the present disclosure relate to a nickel-based lithium metal composite oxide, a method of preparing the same, and a lithium secondary battery including a positive electrode including the same.

### 2. Description of Related Art

With the advance of portable electronic devices and communication devices, the need for the development of lithium secondary batteries having high energy density is high.

In the case of using a lithium metal composite oxide as a positive electrode active material of a lithium secondary battery, when large secondary particles and small secondary particles are mixed, cracking of an active material may be suppressed or reduced even during pressing, and thus excellent performance may be exhibited, and a lithium secondary battery having high energy density may be manufactured.

In the manufacture of a lithium metal composite oxide including a mixture of large secondary particles and small secondary particles, heat treatment processes for large secondary particles and small secondary particles are carried out at the same time. However, because large secondary particles and small secondary particles have different characteristics, large secondary particles or small secondary particles are excessively sintered or incompletely sintered when they are heat-treated at the same time, thereby deteriorating or reducing performance. Accordingly, large secondary particles and small secondary particles are separately heat-treated, and then the heat-treated mixture is additionally heat-treated. However, because a plurality of heat treatment processes are performed as described above, a process of preparing a positive electrode active material is complicated, and preparation costs thereof are increased, and thus improvement in this regard would be beneficial.

## SUMMARY

One or more embodiments of the present disclosure provide nickel-based lithium metal composite oxides having improved structural stability.

One or more embodiments provide methods of preparing the nickel-based lithium metal composite oxides at low cost through simplified processes.

One or more embodiments provide lithium secondary batteries including positive electrodes including the nickel-based lithium metal composite oxides to have improved efficiency and lifetime.

Additional aspects of embodiments will be set forth in part in the description which follows and, in part, will be apparent from the description, or may be learned by practice of the presented embodiments of the disclosure.

According to one or more embodiments, a nickel-based lithium metal composite oxide includes: secondary particles including aggregates of primary particles, wherein a content of nickel in the nickel-based lithium metal composite oxide is 50 mol% or more, based on the total content of transition metals in the nickel-based lithium metal composite oxide, the secondary particles include large secondary particles having a particle size of 10 μm or more and small secondary particles having a particle size of 5 μm or less, and a content of nickel in the large secondary particles is larger than a content of nickel in the small secondary particles.

In a differential capacity (dQ/dV) charge/discharge differential curve of a lithium secondary battery having a positive electrode including the nickel-based lithium metal composite oxide, a ratio (A2/A1) of a discharge peak intensity (A2) to a charge peak intensity (A1), appearing at a voltage of 4.1 V to 4.25 V and a current of 1 C, may be 1.1 or more.

According to one or more embodiments, a method of preparing a nickel-based lithium metal composite oxide includes: mixing a large-particle nickel-based metal hydroxide having a nickel content of 50 mol% or more, based on the total content of transition metals in the large-particle nickel-based metal hydroxide, a small-particle nickel-based metal hydroxide having a nickel content of 50 mol% or more, based on the total content of transition metals in the small-particle nickel-based metal hydroxide, and a lithium precursor to obtain a precursor mixture; and heat-treating the precursor mixture to obtain the aforementioned nickel-based lithium metal composite oxide.

According to one or more embodiments, a lithium secondary battery includes: a positive electrode including the nickel-based lithium metal composite oxide; a negative electrode; and an electrolyte interposed between the positive electrode and the negative electrode.

At least some of the above and other features of the invention are set out in the claims.

## BRIEF DESCRIPTION OF THE DRAWINGS

The above and other aspects and features of certain embodiments of the disclosure will be more apparent from the following description taken in conjunction with the accompanying drawings, in which:

FIG. 1 is a graph illustrating dQ/dV charge/discharge differential curves after 1 cycle of the lithium secondary batteries of Manufacture Example 1 and Comparative Manufacture Examples 1 and 2;
FIG. 2 is a graph illustrating dQ/dV charge/discharge differential curves after 30 cycles of the lithium secondary batteries of Manufacture Example 1 and Comparative Manufacture Example 2;
FIG. 3 is a graph illustrating dQ/dV charge/discharge differential curves after 50 cycles of the lithium secondary batteries of Manufacture Example 1 and Comparative Manufacture Example 2;
FIG. 4 is a graph illustrating dQ/dV charge/discharge differential curves after 1 cycle, 30 cycles, and 50 cycles of the lithium secondary battery of Manufacture Example 1;
FIG. 5 is a graph illustrating dQ/dV charge/discharge differential curves after 1 cycle, 30 cycles, and 50 cycles of the lithium secondary battery of Comparative Manufacture Example 2;
FIG. 6 is a graph of X-ray diffraction analysis of a composite positive electrode active material obtained according to Example 1;
FIG. 7 is a schematic view illustrating a structure of a lithium secondary battery according to an embodiment;
FIG. 8 is a graph illustrating lifetime characteristics of the lithium secondary batteries of Manufacture Examples 1 and 2 and Comparative Manufacture Example 1; and
FIG. 9 is a graph illustrating charge/discharge characteristics in the coin cells manufactured according to Manufacture Example 1 and Comparative Manufacture Example 1.

## DETAILED DESCRIPTION

Reference will now be made in more detail to embodiments of the present disclosure, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of embodiments of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, a nickel-based lithium metal composite oxide, a method of preparing the same, and a lithium secondary battery having a positive electrode including the same will be described in more detail with reference to the accompanying drawings.

Embodiments of the present disclosure provide a nickel-based lithium metal composite oxide, including: secondary particles including aggregates of primary particles, wherein a content (e.g., amount) of nickel in the nickel-based lithium composite oxide is 50 mol% or more, based on the total content of transition metals in the nickel-based lithium metal composite oxide, the secondary particles include large secondary particles having a particle size of 10 μm or more and small secondary particles having a particle size of 5 μm or less, and the content (e.g., amount) of nickel in the large secondary particles is larger than the content (e.g., amount) of nickel in the small secondary particles. The particle sizes referred to herein may be average particle sizes such as, for example, a median particle size or a D50 particle size which indicates that 50% of the particles in a volume distribution of particle sizes have a larger particle size and 50% of the particles in the volume distribution of particle sizes have a smaller particle size.

When the particle is spherical, the term "average particle diameter" of the secondary particles may be, a median diameter (D50), and when the particle is non-spherical, it means the long axis length.

In the present specification, "D50" refers to a particle diameter corresponding to a volume of 50% with respect to a cumulative particle distribution ordered from smallest size to largest size. Unless otherwise defined herein, and the distribution is accumulated in the order of the smallest particle size to the largest particle size. In the curve, when the total number of particles is 100%, it means the value of the particle diameter corresponding to 50% from the smallest particle.

The average particle diameter (D50) may be measured by a method well known to those skilled in the art, for example, may be measured by a particle size analyzer (HORIBA, LA-950 laser particle size analyzer, a laser diffraction particle diameter distribution meter, scanning electron microscope (SEM), or a transmission electron microscope (TEM). As another method, it is measured using a measuring device using a dynamic light-scattering method, data analysis is performed, the number of particles is counted for each particle size range, and the average particle diameter is calculated therefrom. (D50) value can be easily obtained.

For example, the average particle diameter may be measured utilizing a particle size distribution (PSD) meter and/or through scanning electron microscopy (SEM). The long-axis length may be measured through SEM.

In the nickel-based lithium metal composite oxide, the content (e.g., amount) of nickel is 60 mol% or more, 75 mol% or more, or 75 mol% to 99 mol%, based on the total content of transition metals in the nickel-based lithium metal composite oxide.

In a differential capacity (dQ/dV) charge/discharge differential curve of a lithium secondary battery having a positive electrode including the nickel-based lithium metal composite oxide, a ratio (A2/A1) of a discharge peak intensity (A2) to a charge peak intensity (A1), appearing at a voltage of 4.1 V to 4.25 V and a current of 1 C, may be 1.1 or more.

The dQ/dV charge/discharge differential curve is obtained at a voltage of 3.0 V to 4.3 V, for example, at a voltage of 3.0 V to 4.25 V.

In the dQ/dV charge/discharge differential curve (see FIGS. 1 to 5), V represents a voltage to a lithium metal of a negative electrode, and Q represents a charge/discharge capacity of a lithium secondary battery. Further, in the dQ/dV charge/discharge differential curve, the X-axis represents a voltage V, and the Y-axis represents a value (dQ/dV) obtained by differentiating a charge/discharge capacity by voltage.

A lithium secondary battery having excellent capacity characteristics using a nickel-based lithium metal composite oxide may be manufactured by heat-treating a large-particle nickel-based lithium metal composite oxide precursor, a small-particle nickel-based lithium metal composite oxide precursor, and a lithium precursor.

Because the large-particle nickel-based lithium metal composite oxide precursor and the small-particle nickel-based lithium metal composite oxide precursor have different characteristics of each precursor, they were previously individually sintered, and then these precursors were previously mixed with a lithium precursor and subjected to secondary sintering, thereby obtaining a desired nickel-based lithium metal composite oxide. In this way, in order to obtain a nickel-based lithium metal composite oxide, sintering processes were performed three times, resulting in a high manufacturing cost and a complex manufacturing process, improvement of which is desirable.

Thus, without being limited by any particular mechanism or theory, the present inventors prepared embodiments of the present disclosure to provide a nickel-based lithium metal composite oxide having good structural stability and good capacity characteristics, where the nickel-based lithium metal composite oxide is prepared by the process of concurrently (e.g., simultaneously) heat-treating a large-particle nickel-based lithium metal composite oxide precursor, a small-particle nickel-based lithium metal composite oxide precursor, and a lithium precursor once while controlling the particle sizes and nickel contents (e.g., amounts) of the large-particle nickel-based lithium metal composite oxide precursor and the small-particle nickel-based lithium metal composite oxide precursor in set or predetermined ranges.

The large-particle nickel-based lithium metal composite oxide precursor is, for example, a large-particle nickel-based metal hydroxide, and the small-particle nickel-based lithium metal composite oxide precursor is, for example, a small-particle nickel-based metal hydroxide.

The content (e.g., amount) of nickel in the large-particle nickel-based metal hydroxide and the small-particle nickel-based metal hydroxide is 50 mol% or more, 60 mol% or more, 75 mol% or more, or 75 mol% to 99 mol%, based on the total content of transition metals in the large-particle nickel-based metal hydroxide and the small-particle nickel-based metal hydroxide, respectively.

The difference between the content (e.g., amount) of nickel in the large-particle nickel-based metal hydroxide precursor and the content (e.g., amount) of nickel in the small-particle nickel-based metal hydroxide precursor is 10 mol% or more, 11 mol% or more, 11 mol% to 24 mol%, for example 11 mol% to 20 mol%, 11 mol% to 18 mol%, or 12 mol% to 16 mol%. For example, the amount of nickel in the large-particle nickel-based metal hydroxide precursor may be larger than the amount of nickel in the small-particle nickel-based metal hydroxide by 10 mol% or more, 11 mol% or more, 11 mol% to 24 mol%, for example 11 mol% to 20 mol%, 11 mol% to 18 mol%, or 12 mol% to 16 mol%. When the difference in the nickel content (e.g., amount) of the large-particle nickel-based lithium metal composite oxide precursor and the small-particle nickel-based lithium metal composite oxide precursor is within the above range, a nickel-based lithium metal composite oxide having good structural stability and good energy density may be obtained.

The difference in nickel content (e.g., amount) between large secondary particles and small secondary particles contained in the nickel-based lithium metal composite oxide obtained from the precursor is maintained equal to the difference in the nickel content (e.g., amount) between the large-particle nickel-based lithium metal composite oxide precursor and the small-particle nickel-based lithium metal composite oxide precursor. Thus, in some embodiments, the difference between the amount of nickel in the large secondary particles and the amount of nickel in the small secondary particles contained in the nickel-based lithium metal composite oxide is the same or substantially the same as the difference between the amount of nickel in the large-particle nickel-based lithium metal composite oxide precursor and the amount of nickel in the small-particle nickel-based lithium metal composite oxide precursor.

The difference in nickel content (e.g., amount) between large secondary particles and small secondary particles contained in the nickel-based lithium metal composite oxide is 10 mol% or more, 11 mol% or more, for example 11 mol% to 20 mol%, 11 mol% to 18 mol%, or 12 mol% to 16 mol%. For example, the amount of nickel in the large secondary particles may be larger than the amount of nickel in the small secondary particles in the nickel-based lithium metal composite oxide by 10 mol% or more, 11 mol% or more, for example 11 mol% to 20 mol%, 11 mol% to 18 mol%, or 12 mol% to 16 mol%. When the difference in nickel content (e.g., amount) between large secondary particles and small secondary particles is within the above range, a nickel-based lithium metal composite oxide having good structural stability and good energy density may be obtained by concurrently (e.g., simultaneously) heat-treating the large-particle nickel-based lithium metal composite oxide precursor and small-particle nickel-based lithium metal composite oxide precursor for obtaining these particles.

The content (e.g., amount) of nickel in the large secondary particles is 85 mol% to 99 mol%, 85 mol% to 95 mol%, or 88 mol% to 95 mol%, based on the total content (e.g., amount) of transition metals in the large secondary particles. Further, the content (e.g., amount) of nickel in the small secondary particles is 75 mol% to 89 mol%, 80 mol% to 85 mol%, or 75 mol% to 85 mol%, based on the total content (e.g., amount) of transition metals in the small secondary particles.

The particle size of the large-particle nickel-based lithium metal composite oxide precursor is 10 μm to 17 μm, for example 12 μm to 15 μm. Further, the particle size of the small-particle nickel-based lithium metal composite oxide precursor is 2 μm to 5 μm, for example 3 μm to 4 μm. The particle size of the large secondary particles contained in the nickel-based lithium metal composite oxide obtained from such a precursor is 10 μm or more, 12 μm or more, 14 μm or more, 15 μm or more, for example 12 μm to 17 μm.

In an embodiment, the particle size of the large secondary particles is, for example, 10 μm to 17 μm, for example 12 μm to 17 μm. Further, the particle size of the small secondary particles is 2 μm to 5 μm, for example, 3 μm to 4 μm.

When the particle size of the large secondary particles and the particle size of the small secondary particles are within the above ranges, a nickel-based lithium metal composite oxide having good structural stability and good energy density may be obtained by concurrently (e.g., simultaneously) heat-treating the large-particle nickel-based lithium metal composite oxide precursor and small-particle nickel-based lithium metal composite oxide precursor for obtaining these particles. The content (e.g., amount) of the large-particle nickel-based lithium metal composite oxide precursor is 30 parts by weight to 90 parts by weight, 50 parts by weight to 90 parts by weight, 60 parts by weight to 90 parts by weight, or 80 parts by weight to 90 parts by weight, based on 100 parts by weight of the total content (e.g., amount) of the large-particle nickel-based lithium metal composite oxide precursor and the small-particle nickel-based lithium metal composite oxide precursor.

In the nickel-based lithium metal composite oxide of the present disclosure, the content (e.g., amount) of the large secondary particles is 30 parts by weight to 90 parts by weight, 50 parts by weight to 90 parts by weight, 60 parts by weight to 90 parts by weight, or 80 parts by weight to 90 parts by weight, based on 100 parts by weight of the total content (e.g., amount) of the large secondary particles and the small secondary particles.

When the mixing weight ratio of the large secondary particle and the small secondary particle is within the above range, a nickel-based lithium metal composite oxide having good structural stability and good energy density may be obtained by concurrently (e.g., simultaneously) heat-treating the large-particle nickel-based lithium metal composite oxide precursor and small-particle nickel-based lithium metal composite oxide precursor for obtaining these particles.

In a lithium secondary battery having a positive electrode containing the nickel-based lithium metal composite oxide according to an embodiment, in a dQ/dV charge/discharge differential curve at a voltage of 4.1 V to 4.25 V and a current of 1 C, the ratio (A2/A1) of discharge peak intensity (A2) to charge peak intensity (A1) is 1.1 or more, for example 1.1 to 1.5. The charge peak and the discharge peak appear at a current of 1 C and a voltage of 4.1 V to 4.25 V.

The charging and discharging conditions for the lithium secondary battery having the positive electrode are as follows.

The lithium secondary battery is charged with a constant current of 1 C until a voltage reaches 4.3 V, and is then charged with a constant voltage until a current reaches 0.05 C. The completely charged battery is discharged at a constant current of 1 C until the voltage reaches 3 V after a pause of about 10 minutes. This cycle is repeatedly carried out several times, and evaluation is performed.

The dQ/dV charge/discharge differential curve is obtained after 1 to 100 charge/discharge cycles, after 1 to 80 charge/discharge cycles, or after 1 to 50 charge/discharge cycles. The charge/discharge cycle may be repeatedly carried out, for example, a total of 50 times.

The charge peak appears at a voltage of 4.17 V to 4.25 V, for example, 4.19 V, and the discharge peak appears at a voltage of 4.14 V to 4.17 V, for example, 4.16 V.

The differential capacity (dQ/dV) charge/discharge differential curve refers to the capacity characteristics of operating ions for a positive electrode active material by voltage. The position, intensity difference, and area of the main peak may differ depending on the type, kind, physical properties, and/or the like of a positive electrode active material.

The differential capacity (dQ/dV) illustrates the results of measuring dQ/dV distributions by applying a discharge condition of 1 C-rate to a lithium battery including a positive electrode including the nickel-based lithium metal composite oxide and a lithium metal negative electrode of the present disclosure. The nickel-based lithium metal composite oxide may include, for example, lithium Nickel Cobalt Aluminium oxide (NCA).

In the dQ/dV distributions, 3 to 6 main peaks, for example, 5 main peaks appear. In this case, the peak appearing at a voltage of about 3.65 V corresponds to a main peak of NCA, which is related to the phase transition from a hexagonal system to a monoclinic system. Further, the peak appearing in a voltage range of 4.1 V to 4.25 V refers to a structural change due to the deterioration of NCA.

In the dQ/dV distributions, the ratio (A2/A1) of the discharge peak intensity (A2) to the charge peak intensity (A1) may be 1.1 to 1.5. The amount of electric energy stored in the lithium secondary battery may be determined from the charge peak intensity, and the amount of structural change may be determined from the discharge peak intensity. When the ratio (A2/A1) of the discharge peak intensity (A2) to the charge peak intensity (A1) is within the above range, the ratio (A2/A1) thereof is related to a difference in Ni content (e.g., amount) between large particles and small particles and a difference in Co content (e.g., amount) between large particles and small particles. Further, when the ratio (A2/A1) thereof is within this range, NCA has low surface resistance, and thus a lithium secondary battery having excellent high-temperature lifetime and storage characteristics may be manufactured when using the NCA having low surface resistance.

The dQ/dV charge/discharge differential curve is for a lithium secondary battery after 1 charge/discharge cycle to 50 charge/discharge cycles, for example, after 1 charge/discharge cycle, after 30 charge/discharge cycles, or after 50 charge/discharge cycles. Evaluation conditions of the charge/discharge cycle are as described in Evaluation Example 1 that is further described herein below.

In the dQ/dV charge/discharge differential curve of the nickel-based lithium metal composite oxide according to an embodiment, the charge peak appearing at a voltage of 3.5 V to 3.8 V has a gentle slope.

The nickel-based lithium metal composite oxide may be a compound represented by Formula 1.

Formula 1 $$Li_a(Ni_{1-x-y-z}Co_xM_yM'_z)O_2$$

In Formula 1, M is manganese (Mn), aluminuim (Al), or a combination thereof, M' is boron (B), magnesium (Mg), calcium (Ca), strontium (Sr), barium (Ba), titanium (Ti), vanadium (V), chromium (Cr), iron (Fe), copper (Cu), zirconium (Zr), or a combination thereof, and $0.95 \leq a \leq 1.3$, $0<x<0.5$, $0<y<0.5$, $0 \leq z<0.5$, and $0<x+y+z \leq 0.5$ are satisfied.

The sum of x+y+z is, for example, 0.01 to 0.2, 0.01 to 0.12, 0.04 to 0.1, or 0.04 to 0.08.

In the compound of Formula 1, the content (e.g., amount) of nickel is 50 mol% or more, based on the total content of transition metals in the nickel-based lithium metal composite oxide, which is greater than the content (e.g., amount) of each of transition metals such as cobalt, M, and M'. When a positive electrode containing such a nickel-based lithium metal composite oxide is employed, a lithium secondary battery having lithium diffusivity, high conductivity (e.g., high electrical conductivity), and higher capacity at the same voltage may be manufactured.

In Formula 1, $0.95 \leq a \leq 1.3$ and $0<x \leq 0.3$ may be satisfied, and $0 \leq y \leq 0.5$, $0 \leq z \leq 0.05$, and $0.5 \leq (1-x-y-z) \leq 0.96$ may be satisfied. In Formula 1, a may be 1 to 1.1, x may be 0.05 to 0.3, or 0.05 to 0.1, y may be 0.05 to 0.3, and z may be 0, or 0.001 to 0.01.

According to an embodiment, in Formula 1, z is 0.

For example, the compound of Formula 1 may be $Li_{1.1}Ni_{0.92}Co_{0.05}Al_{0.03}O_2$, $LiNi_{0.8}Co_{0.1}Al_{0.1}O_2$, $LiNi_{0.85}Co_{0.1}Al_{0.05}O_2$, $Li_{1.1}Ni_{0.92}Co_{0.05}Mn_{0.03}O_2$, $LiNi_{0.8}Co_{0.1}Mn_{0.1}O_2$, $LiNi_{0.85}Co_{0.1}Mn_{0.05}O_2$, $Li_{1.1}Ni_{0.94}Co_{0.03}Mn_{0.03}O_2$, $LiNi_{0.8}Co_{0.15}Al_{0.05}O_2$, $LiNi_{0.94}Co_{0.03}Al_{0.03}O_2$, $LiNi_{0.8}Co_{0.15}Al_{0.05}O_2$, $LiNi_{0.96}Co_{0.02}Al_{0.02}O_2$, and/or the like.

According to an embodiment, the large secondary particle is a compound of Formula 1 where $0.88 \leq (1-x-y-z) \leq 0.96$, $0.01 \leq x \leq 0.08$, $0.001 \leq y \leq 0.05$, and $0 \leq z \leq 0.01$. Further, the small secondary particle may be a compound of Formula 1 where $0.75 \leq (1-x-y-z) \leq 0.85$, $0.01 \leq x \leq 0.15$, $0.001 \leq y \leq 0.05$, and $0 \leq z \leq 0.01$.

The large secondary particle according to an embodiment is a compound represented by Formula 1-1, and the small secondary particle according to an embodiment is a compound represented by Formula 1-2.

Formula 1-1 $$Li_a(Ni_{1-x-y-z}Co_xAl_yM_z)O_2$$

In Formula 1-1, M is boron (B), magnesium (Mg), calcium (Ca), strontium (Sr), barium (Ba), titanium (Ti), vanadium (V), chromium (Cr), iron (Fe), copper (Cu), zirconium (Zr), or a combination thereof, and $0.95 \leq a \leq 1.3$, $0.88 \leq (1-x-y-z) \leq 0.96$, $0.01 \leq x \leq 0.08$, $0.001 \leq y \leq 0.05$, and $0 \leq z \leq 0.01$ are satisfied.

In Formula 1-1, $0.88 \leq (1-x-y-z) \leq 0.96$, $0.01 \leq x \leq 0.08$, $0.001 \leq y \leq 0.05$, and $0 \leq z \leq 0.01$ are satisfied.

Formula 1-2 $$Li_a(Ni_{1-x-y-z}Co_xAl_yM_z)O_2$$

In Formula 1-2, M is boron (B), magnesium (Mg), calcium (Ca), strontium (Sr), barium (Ba), titanium (Ti), vanadium (V), chromium (Cr), iron (Fe), copper (Cu), zirconium (Zr), or a combination thereof, and $0.95 \leq a \leq 1.3$, $0.75 \leq (1-x-y-z) \leq 0.85$, $0.01 \leq x \leq 0.05$, $0.001 \leq y \leq 0.05$, and $0 \leq z \leq 0.01$ are satisfied.

In Formula 1-2, $0.75 \leq (1-x-y-z) \leq 0.85$, $0.01 \leq x \leq 0.05$, $0.001 \leq y \leq 0.05$, and $0 \leq z \leq 0.01$ are satisfied.

For example, the large secondary particle of Formula 1-1 may be $Li_{1.1}Ni_{0.92}Co_{0.05}Al_{0.03}O_2$, $LiNi_{0.94}Co_{0.03}Alo_{0.03}O_2$, $LiNi_{0.88}Co_{0.08}Al_{0.04}O_2$, $LiNi_{0.88}Co_{0.06}Al_{0.06}O_2$, $LiNi_{0.90}Co_{0.05}Al_{0.05}O_2$, $LiNi_{0.96}Co_{0.02}Al_{0.02}O_2$, and/or the like, and the small secondary particle of Formula 1-2 may be $LiNi_{0.8}Co_{0.15}Al_{0.05}O_2$, $LiNi_{0.75}Co_{0.20}Al_{0.05}O_2$,

and/or the like.

The specific surface area of the large secondary particles is 0.1 $m^2/g$ to 1 $m^2/g$, for example 0.3 $m^2/g$ to 0.8 $m^2/g$, and the specific surface area of the small secondary particles is 2 $m^2/g$ to 15 $m^2/g$, for example 2 $m^2/g$ to 10 $m^2/g$. The specific surface area may be a BET specific surface area measured by a Brunauer-Emmett-Teller (BET) method. When the specific surface area of the large secondary particles and the specific surface area of the small secondary particles are within the above ranges, a positive electrode and a lithium secondary battery having excellent capacity, life, and high-temperature storage characteristics may be manufactured.

The compound of Formula 1 has a structure in which primary particles are aggregated to form a spherical secondary particle, and the average particle diameter of the secondary particles is 1 μm to 25 μm, for example, 5 μm to 25 μm.

Hereinafter, a method of preparing a composite positive electrode active material according to an embodiment will be described.

According to embodiments of the disclosure, nickel-based metal hydroxide as large secondary particles, nickel-based metal hydroxide as small secondary particles, and a lithium precursor are mixed to obtain a precursor mixture. The precursor mixture is heat-treated to obtain a composite positive electrode active material.

Nickel-based metal hydroxide is a precursor of nickel-based lithium metal composite oxide.

The particle size of nickel-based metal hydroxide, as large secondary particles, is 10 μm or more, for example, 12 μm to 17 μm, and the particle size of nickel-based metal hydroxide, as small secondary particles, is 5 μm or less, for example, 2 μm to 5 μm.

The nickel-based metal hydroxide may be a compound represented by Formula 2.

Formula 2 $(Ni_{1-x-y-z}Co_xM_yM'_z)(OH)_2$

In Formula 2, M is manganese (Mn), aluminium (Al), or a combination thereof, M' is boron (B), magnesium (Mg), calcium (Ca), strontium (Sr), barium (Ba), titanium (Ti), vanadium (V), chromium (Cr), iron (Fe), copper (Cu), zirconium (Zr), or a combination thereof, and $0<x<0.5$, $0<y<0.5$, $0\leq z<0.5$, and $0<x+y+z\leq 0.5$ are satisfied.

In Formula 2, $0<x\leq 0.3$, $0\leq y\leq 0.5$, and $0\leq z\leq 0.05$ may be satisfied. In Formula 2, x+y+z may be 0.01 to 0.25, for example 0.04 to 0.25.

The nickel-based metal hydroxide may be a compound represented by Formula 2-1.

Formula 2-1 $(Ni_{1-x-y-z}Co_xAl_yM_z)(OH)_2$

In Formula 2-1, M is an element selected from boron (B), magnesium (Mg), calcium (Ca), strontium (Sr), barium (Ba), titanium (Ti), vanadium (V), chromium (Cr), iron (Fe), copper (Cu), and zirconium (Zr), and $0<x<0.5$, $0<y<0.5$, $0\leq z<0.5$, and $0<x+y+z\leq 0.50$ are satisfied.

In Formula 2-1, for example, $0<x\leq 0.3$, $0\leq y\leq 0.5$, and $0\leq z\leq 0.05$ may be satisfied. In Formula 2-1, x+y+z may be 0.01 to 0.25, for example 0.04 to 0.25.

The nickel-based metal hydroxide according to an embodiment is, for example, $Ni_{0.92}Co_{0.05}Al_{0.03}(OH)_2$, $Ni_{0.94}Co_{0.03}Al_{0.03}(OH)_2$, $Ni_{0.88}Co_{0.06}Al_{0.06}(OH)_2$, $Ni_{0.96}Co_{0.02}Al_{0.02}(OH)_2$, $Ni_{0.93}Co_{0.04}Alo_{0.03}(OH)_2$, $Ni_{0.8}Co_{0.15}Al_{0.05}(OH)_2$, $Ni_{0.75}Co_{0.20}Al_{0.05}(OH)_2$, $Ni_{0.92}Co_{0.05}Mn_{0.03}(OH)_2$, $Ni_{0.94}Co_{0.03}Mn_{0.03}(OH)_2$, $Ni_{0.88}Co_{0.06}Mn_{0.06}(OH)_2$, $Ni_{0.96}Co_{0.02}Mn_{0.02}(OH)_2$, $Ni_{0.93}Co_{0.04}Mn_{0.03}(OH)_2$, $Ni_{0.8}Co_{0.15}Mn_{0.05}(OH)_2$, $Ni_{0.75}Co_{0.20}Mn_{0.05}(OH)_2$, or a combination thereof.

In the present specification, the composition of the large-particle and small-particle nickel-based metal hydroxides is controlled to correspond to the composition of the large-particle and small-particle nickel-based lithium metal composite oxides.

As the lithium precursor, for example, lithium hydroxide, lithium fluoride, lithium carbonate, $Li_2COOH$, or a mixture thereof is used. The content (e.g., amount) of the lithium precursor may be controlled such that the molar ratio (Li/M) of lithium in the lithium precursor to the metal of the nickel-based metal hydroxide is more than 0.95, for example, more than 1.0, for example 1.05 to 1.3, for example 1.1 to 1.2.

According to embodiments of the disclosure, the metal of the nickel-based metal hydroxide may refer to a mixed metal of Ni, Co, Mn, M, and M' in Formula 2. The content (e.g., amount) of the lithium precursor and the content (e.g., amount) of the nickel-based metal hydroxide are controlled stoichiometrically such that the nickel-based lithium metal composite oxide of Formula 1 may be prepared.

The mixing may be dry mixing, and may be carried out using a mixer and/or the like.

The heat treatment may be carried out in an oxidative gas atmosphere.

The oxidative gas atmosphere uses an oxidative gas such as oxygen and/or air, and, for example, the oxidative gas is composed of 10 vol% to 20 vol% of oxygen and/or air and 80 vol% to 90 vol% of inert gas.

It is suitable or appropriate to perform the heat treatment in a range below the densification temperature while a reaction between the lithium precursor and the nickel-based metal hydroxide proceeds. Here, the densification temperature refers to a temperature at which crystallization is suitably or sufficiently achieved such that an active material can realize a charge capacity. The heat treatment may be carried out at a temperature of 650 °C to 800 °C, 700 °C to 750 °C, for example 700 °C to 720 °C.

Heat treatment time varies depending on heat treatment temperature and/or the like.

The mixing weight ratio of the nickel-based metal hydroxide as large secondary particles and the nickel-based metal hydroxide as small secondary particles is 9:1 to 8:2.

The nickel-based metal hydroxide, as large secondary particles, and the nickel-based metal hydroxide, as small secondary particles, may be prepared according to any suitable method generally used in the art. In some embodiments, the nickel-based metal hydroxide, as large secondary particles, and the nickel-based metal hydroxide, as small secondary particles, may be prepared by performing substantially the same process except for reaction time of a precursor (raw material) of the nickel-based metal hydroxide and a drying process of a product obtained after a reaction.

In the case of the large-particle nickel-based metal hydroxide, the reaction time for obtaining the nickel-based metal hydroxide is, for example, in a range of about 90 to about 130 hours, and the drying process is carried out at a temperature of about 180 to about 200 °C, about 185 to about 200 °C, about 190 to about 200 °C for example about 200 °C. In the case of the small-particle nickel-based metal hydroxide, the reaction time of the precursor (raw material) of the small-particle nickel-based metal hydroxide is reduced as compared with the large-particle nickel-based metal hydroxide, and is, for example, about 20 hours to about 30 hours, for example, about 20 hours to about 28 hours. The drying process of the product after the reaction is carried out a temperature in a range of about 200 °C to about 220 °C.

When using the method of preparing a nickel-based lithium metal composite oxide according to an embodiment, a positive electrode active material having high capacity, improved charge/discharge efficiency and lifetime may be obtained.

Hereinafter, a method of manufacturing a lithium secondary battery, the battery including a positive electrode containing the nickel-based lithium metal composite oxide according to an embodiment as a positive electrode active material, a negative electrode, a lithium salt-containing non-aqueous electrolyte, and a separator, will be described.

The positive electrode and the negative electrode are prepared by applying and drying a composition for forming a positive electrode active material layer and a composition for forming a negative electrode active material layer on current collectors, respectively. The composition for forming a positive electrode active material is prepared by mixing a positive electrode active material, a conductive agent, a binder, and a solvent. As the positive electrode active material, the positive electrode active material according to an embodiment is used.

In some embodiments, the binder, which is a component aiding in bonding between the active material and the conductive agent and bonding to the current collector, is added in an amount of 1 part by weight to 50 parts by weight based on 100 parts by weight of the total weight of the positive electrode active material. Non-limiting examples of the binder may include polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, fluorine rubber, and various suitable copolymers. The content (e.g., amount) of the binder is 2 parts by weight to 5 parts by weight based on 100 parts by weight of the total weight of the positive electrode active material. When the content (e.g., amount) of the binder is within the above range, the binding force of the active material layer to the current collector is good.

The conductive agent is not particularly limited as long as it has conductivity (e.g., electrical conductivity) without causing chemical changes (e.g., undesirable chemical changes) to the battery, and examples thereof may include graphite such as natural graphite and/or artificial graphite; carbon-based materials such as carbon black, acetylene black, ketjen black, channel black, furnace black, lamp black, and thermal black; conductive fibers such as carbon fibers and metal fibers; carbon fluoride; metal powders such as aluminum powder and nickel powder; conductive whiskers (e.g., electrically conductive whiskers) such as zinc oxide and potassium titanate; conductive metal oxides such as titanium oxide; and conductive materials such as polyphenylene derivatives.

The content (e.g., amount) of the conductive agent is 2 parts by weight to 5 parts by weight based on 100 parts by weight of the total weight of the positive electrode active material. When the content (e.g., amount) of the conductive agent is within the above range, the finally obtained electrode has excellent conductivity properties (e.g., excellent electrical conductivity properties).

A non-limiting example of the solvent may include N-methylpyrrolidone. The content (e.g., amount) of the solvent is 100 to 3000 parts by weight based on 100 parts by weight of the positive electrode active material. When the content (e.g., amount) of the solvent is within the above range, the operation for forming an active material layer is easy.

The positive electrode current collector has a thickness of 3 μm to 500 μm, and is not particularly limited as long as it has high conductivity (e.g., high electrical conductivity) without causing chemical changes (e.g., undesirable chemical changes) in the battery, and non-limiting examples thereof may include current collectors in which stainless steel, aluminum, nickel, titanium, heat-treated carbon, or aluminum and/or stainless steel surface-treated with carbon, nickel, titanium, and/or silver is used. The current collector may increase the adhesion force of the positive electrode active material by forming fine irregularities on its surface, and various suitable forms such as films, sheets, foils, nets, porous bodies, foams, and/or nonwoven fabrics are possible.

Separately, a negative electrode active material, a binder, a conductive agent, and a solvent are mixed to prepare a composition for forming a negative electrode active material layer.

The negative electrode active material is a material capable of absorbing and desorbing lithium ions. Non-limiting examples of the negative electrode active material may include carbon-based materials such as graphite and carbon, lithium metals and alloys thereof, and silicon oxide-based materials. According to an embodiment of the present disclosure, silicon oxide is used.

Non-limiting examples of the binder may include polyvinylidene fluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene-butadiene rubber (SBR), fluorine rubber, polymers in which polyacrylic acid and hydrogen thereof are substituted with Li, Na, and/or Ca, and various suitable copolymers. The binder is added in an amount of 1 part by weight to 50 parts by weight based on 100 parts by weight of the total weight of the negative electrode active material. As the non-limiting examples of such a binder, the same binder as in the positive electrode may be used.

The composition for forming the negative electrode active material layer may further include a conductive agent (e.g., an electrically conductive agent). The conductive agent is not particularly limited as long as it has conductivity (e.g., electrical conductivity) without causing chemical changes to the battery, and examples thereof may include graphite such as natural graphite and/or artificial graphite; carbon-based materials such as carbon black, acetylene black, ketjen black, channel black, furnace black, lamp black, and thermal black; conductive fibers such as carbon fibers and metal fibers; conductive tubes such as carbon nanotubes; carbon fluoride; metal powders such as aluminium powder and nickel powder; conductive whiskers (e.g., electrically conductive whiskers) such as zinc oxide and potassium titanate; conductive metal oxides such as titanium oxide; and conductive materials such as polyphenylene derivatives. The conductive agent may be, for example, carbon black, and, for example, may be carbon black having an average particle diameter of several tens of nanometers.

The content (e.g., amount) of the conductive agent may be 0.01 parts by weight to 10 parts by weight, 0.01 parts by weight to 5 parts by weight, or 0.1 parts by weight to 2 parts by weight based on 100 parts by weight of the total weight of the negative electrode active material layer.

The composition for forming the negative electrode active material layer may further include a thickener. As the thickener, at least one selected from carboxymethyl cellulose (CMC), carboxyethyl cellulose, starch, regenerated cellulose, ethyl cellulose, hydroxymethyl cellulose, hydroxyethyl cellulose, hydroxypropyl cellulose, and polyvinyl alcohol may be used.

The content (e.g., amount) of the solvent is 100 to 3000 parts by weight based on 100 parts by weight of the negative electrode active material. When the content (e.g., amount) of the solvent is within the above range, the operation for forming the negative electrode active material layer is easy. As the solvent, the same type or kind of material as in manufacturing the positive electrode may be used.

The negative electrode current collector is generally made to have a thickness of 3 $\mu$m to 500 $\mu$m. The negative electrode current collector is not particularly limited as long as it has high conductivity (e.g., high electrical conductivity) without causing chemical changes (e.g., undesirable chemical changes) in the battery, and non-limiting examples thereof may include current collectors in which stainless steel, aluminium, nickel, titanium, heat-treated carbon, or aluminum or stainless steel surface-treated with carbon, nickel, titanium, and/or silver is used, and a current collector made of an aluminium-cadmium alloy. Like the positive electrode current collector, the negative electrode current collector may increase the adhesion force of the negative electrode active material by forming fine irregularities on its surface, and various suitable forms such as films, sheets, foils, nets, porous bodies, foams, and/or nonwoven fabrics are possible.

A separator is interposed between the positive electrode and negative electrode prepared according to the above processes.

The separator has a pore diameter of 0.01 $\mu$m to 10 $\mu$m and a thickness of 5 $\mu$m to 300 $\mu$m. For example, as the separator, an olefin-based polymer such as polypropylene and/or polyethylene; and/or a sheet and/or nonwoven fabric made of glass fiber is used. When a solid electrolyte such as a polymer is used as the electrolyte, the solid electrolyte may also serve as the separator.

The lithium salt-containing non-aqueous electrolyte includes a non-aqueous electrolyte and a lithium salt. As the non-aqueous electrolyte, a non-aqueous electrolyte solution, an organic solid electrolyte, an inorganic solid electrolyte, and/or the like is used.

Non-limiting examples of the non-aqueous electrolyte may include aprotic organic solvents such as N-methyl-2-pyrrolidinone, propylene carbonate, ethylene carbonate, butylene carbonate, dimethyl carbonate, diethyl carbonate, gammabutyrolactone, 1,2-dimethoxyethane, 2-methyl tetrahydrofuran, dimethyl sulfoxide, 1,3-dioxolane, N,N-formamide, N,N-dimethylformamide, dioxolane, acetonitrile, nitro methane, methyl formate, methyl acetate, phosphoric acid triesters, trimethoxy methane, dioxolane derivatives, sulfolane, methyl sulfolane, 1,3-dimethyl-2-imidazolidinone, propylene carbonate derivatives, tetrahydrofuran derivatives, ethers, methyl propionate, and ethyl propionate.

Non-limiting examples of the organic solid electrolyte may include polyethylene derivatives, polyethylene oxide derivatives, polypropylene oxide derivatives, phosphoric ester polymer, polyester sulfide, polyvinyl alcohol, and polyvinylidene fluoride.

Non-limiting examples of the inorganic solid electrolyte may include nitrides, halogenides and sulfates of lithium (Li) such as $Li_3N$, LiI, $Li_5NI_2$, $Li_3N$-LiI-LiOH, $LiSiO_4$, $Li_2SiS3$, $Li_4SiO_4$, $Li_4SiO_4$-LiI-LiOH, and $Li_3PO4$-$Li_2S$-$SiS_2$.

Non-limiting examples of the lithium salt, as materials easily soluble in the non-aqueous electrolyte, may include LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, and $(FSO_2)_2NLi$.

FIG. 7 is a schematic cross-sectional view illustrating a structure of a lithium secondary battery according to an embodiment.

Referring to FIG. 7, a lithium secondary battery 21 includes a positive electrode 23, a negative electrode 22, and a separator 24. The positive electrode 23, the negative electrode 22, and the separator 24 are wound or folded to be accommodated in a battery case 25. Subsequently, an organic electrolyte is injected into the battery case 25 and sealed with a cap assembly 26 to complete the lithium secondary battery 21. The battery case 25 may be a cylindrical case, a rectangular case, a thin film case, and/or the like. For example, the lithium secondary battery 21 may be a large thin film battery. The lithium secondary battery may be a lithium ion battery. The separator 24 may be between the positive electrode 23 and the negative electrode 22 to form a cell structure. After the cell structure is laminated in a bi-cell structure, the laminated cell structure is impregnated with an organic electrolyte, and the resulting product is accommodated in a pouch and sealed to complete a lithium ion polymer battery. Further, the plurality of cell structures are stacked to form a battery pack, and this battery pack may be used in all appliances requiring high capacity and high output. For example, this battery pack may be used in notebooks, smart phones, electric vehicles, and/or the like.

Further, because the lithium secondary battery has excellent storage stability, lifetime characteristics, and high rate characteristics at high temperatures, it may be used in electric vehicles (EV). For example, the lithium secondary battery may be used in hybrid vehicles such as plug-in hybrid electric vehicles (PHEV).

Embodiments of the present disclosure will be described in more detail with reference to the following Examples and Comparative Examples. However, these Examples are set forth to illustrate embodiments of the present disclosure, and the scope of the present disclosure is not limited thereto.

**Preparation of nickel-based metal hydroxide**

**Preparation Example 1: Preparation of large-particle nickel-based metal hydroxide**

Nickel-based metal hydroxide ($Ni_{0.94}Co_{0.03}Al_{0.03}(OH)_2$) was obtained according to a coprecipitation method that is further described herein below.

Ammonia water was put into a reactor, and the pH of a mixture in the reactor was adjusted using added sodium hydroxide while stoichiometrically controlling a raw material of the nickel-based metal hydroxide so as to obtain a composition of the final product to be produced. Next, while stirring, the introduction of a raw material solution was stopped until a desired size was obtained, and a drying process was performed to obtain a target product. These processes will be described in more detail as follows.

Nickel sulfate ($NiSO_4 \cdot 6H_2O$), cobalt sulfate ($CoSO_4 \cdot 7H_2O$) and aluminium sulfate ($Al_2(SO_4)_3 \cdot H_2O$), as raw materials of the nickel-based metal hydroxide, were dissolved in distilled water as a solvent at a molar ratio of 94:3:3 to prepare a mixed solution. In order to form a complex compound, a diluted solution of aqueous ammonia ($NH_4OH$) and sodium hydroxide (NaOH) as a precipitant were prepared. Thereafter, a mixed solution of metal raw materials, ammonia water, and sodium hydroxide were introduced into a reactor, respectively. Sodium hydroxide was added to maintain the pH inside the reactor. Next, a reaction was carried out for about 95 hours while stirring, and then the introduction of the raw material solution was stopped.

The slurry solution in the reactor was filtered and washed with high-purity distilled water, dried in a hot air oven at 200 °C for 24 hours to obtain large-particle nickel-based metal hydroxide ($Ni_{0.94}Co_{0.03}Al_{0.03}(OH)_2$) powder having a particle size (D50) of about 12 μm.

**Preparation Example 2: Preparation of small-particle nickel-based metal hydroxide**

Small-particle nickel-based metal hydroxide ($Ni_{0.8}Co_{0.15}Al_{0.05}(OH)_2$) powder having a particle size (D50) of about 3 μm was obtained in substantially the same manner as in Preparation Example 1, except that the contents (e.g., amounts) of nickel sulfate ($NiSO_4 \cdot 6H_2O$), cobalt sulfate ($CoSO_4 \cdot 7H_2O$) and aluminium sulfate ($Al_2(SO_4)_3 \cdot H_2O$) were stoichiometrically controlled so as to obtain small-particle nickel-based metal hydroxide ($Ni_{0.8}Co_{0.15}Al_{0.05}(OH)_2$), a proc-

ess of drying in a hot air oven at 210 °C for 24 hours was used instead of the process of drying in a hot air oven at 200 °C for 24 hours when drying the precursor, and the reaction time was 25 hours.

**Preparation Example 3: Preparation of large-particle nickel-based metal hydroxide**

Large-particle nickel-based metal hydroxide ($Ni_{0.96}Co_{0.02}Al_{0.02}(OH)_2$) powder having a particle size (D50) of about 12 μm was obtained in substantially the same manner as in Preparation Example 1, except that the contents (e.g., amounts) of nickel sulfate ($NiSO_4 \cdot 6H_2O$), cobalt sulfate ($CoSO_4 \cdot 7H_2O$) and aluminium sulfate ($Al_2(SO_4)_3 \cdot H_2O$) were stoichiometrically controlled so as to obtain large-particle nickel-based metal hydroxide ($Ni_{0.96}Co_{0.02}Al_{0.02}(OH)_2$).

**Preparation Example 4: Preparation of large-particle nickel-based metal hydroxide**

Large-particle nickel-based metal hydroxide ($Ni_{0.94}Co_{0.03}Al_{0.03}(OH)_2$) powder having a particle size (D50) of about 10 μm was obtained instead of large-particle nickel-based metal hydroxide ($Ni_{0.94}Co_{0.03}Al_{0.03}(OH)_2$) powder having a particle size (D50) of about 12 μm in substantially the same manner as in Preparation Example 1, except the reaction time was changed into about 90 hours while stirring.

**Preparation Example 5: Preparation of large-particle nickel-based metal hydroxide**

Large-particle nickel-based metal hydroxide ($Ni_{0.94}Co_{0.03}Al_{0.03}(OH)_2$) powder having a particle size (D50) of about 17 μm was obtained instead of large-particle nickel-based metal hydroxide ($Ni_{0.94}Co_{0.03}Al_{0.03}(OH)_2$) powder having a particle size (D50) of about 12 μm in substantially the same manner as in Preparation Example 1, except that sodium hydroxide was introduced in order to maintain the pH inside the reactor, and the reaction time was changed to about 130 hours while stirring.

**Preparation Example 6: Preparation of small-particle nickel-based metal hydroxide**

Small-particle nickel-based metal hydroxide ($Ni_{0.8}Co_{0.15}Al_{0.05}(OH)_2$) powder having a particle size (D50) of about 2 μm was obtained instead of small-particle nickel-based metal hydroxide ($Ni_{0.8}Co_{0.15}Al_{0.05}(OH)_2$) powder having a particle size (D50) of about 3 μm in substantially the same manner as in Preparation Example 2, except that sodium hydroxide was introduced in order to maintain the pH inside the reactor, and the reaction time was changed to about 22 hours while stirring.

**Preparation Example 7: Preparation of small-particle nickel-based metal hydroxide**

Small-particle nickel-based metal hydroxide ($Ni_{0.8}Co_{0.15}Al_{0.05}(OH)_2$) powder having a particle size (D50) of about 5 μm was obtained instead of small-particle nickel-based metal hydroxide ($Ni_{0.8}Co_{0.15}Al_{0.05}(OH)_2$) powder having a particle size (D50) of about 3 μm in substantially the same manner as in Preparation Example 2, except that sodium hydroxide was introduced in order to maintain the pH inside the reactor, and the reaction time was changed to about 28 hours while stirring.

**Preparation of nickel-based lithium metal composite oxide**

**Example 1**

The large-particle nickel-based metal hydroxide powder having a particle size of about 12 μm obtained in Preparation Example 1 and the small-particle nickel-based metal hydroxide powder having a particle size of about 3 μm obtained in Preparation Example 2 were mixed at a mixing weight ratio of 80:20.

The mixture of the large-particle nickel-based metal hydroxide powder and the small-particle nickel-based metal hydroxide powder were mixed with lithium hydroxide (LiOH) at a mixing ratio of 1:1.05 using a Henschel mixer in a dry state, and heat-treated at about 720 °C for 10 hours in an oxygen atmosphere to obtain nickel-based lithium metal composite oxide ($Li_{1.05}Ni_{0.92}Co_{0.05}Al_{0.03}O_2$) including large secondary particles and small secondary particles. The average particle diameter (D50) of the large secondary particles was about 12 μm, the average particle diameter (D50) of the small secondary particles was about 3 μm, the mixing weight ratio of the large secondary particles and the small secondary particles was 80:20, and the difference in the nickel content (e.g., amount) between the large secondary particles and the small secondary particles was about 14 mol%.

**Example 2**

Nickel-based lithium metal composite oxide including large secondary particles and small secondary particles given in Table 1 below was obtained in substantially the same manner as in Example 1, except that the mixing weight ratio of the large-particle nickel-based metal hydroxide powder having a particle size of about 12 μm obtained in Preparation Example 1 and the small-particle nickel-based metal hydroxide powder having a particle size of about 3 μm obtained in Preparation Example 2 was 90:10, and heat treatment was carried out at about 720 °C for about 10 hours in an oxygen atmosphere. The D50 of the large secondary particles was about 12 μm, the D50 of the small secondary particles was about 3 μm, the mixing weight ratio of the large secondary particles and the small secondary particles was 90:10, and the difference in the nickel content (e.g., amount) between the large secondary particles and the small secondary particles was about 14 mol%.

Table 1

| Class. | Large secondary particles | Small secondary particles | Mixing weight ratio of large secondary particles and small secondary particles | Difference (mol%) in nickel content between large secondary particles and small secondary particles |
|---|---|---|---|---|
| Example 1 | $LiNi_{0.94}Co_{0.03}Al_{0.03}O_2$ (Particle diameter (particle size): 12 μm) | $LiNi_{0.8}Co_{0.15}Al_{0.05}O_2$ (Particle diameter: 3 μm) | 8:2 | 14 |
| Example 2 | $LiNi_{0.94}Co_{0.03}Al_{0.03}O_2$ (Particle diameter: 12 μm) | $LiNi_{0.8}Co_{0.15}Al_{0.05}O_2$ (Particle diameter: 3 μm) | 9:1 | 14 |

**Examples 3 to 6**

Nickel-based lithium metal composite oxides were obtained in substantially the same manner as in Example 1, except that the heat treatment temperature of the nickel-based metal hydroxide was changed as given in Table 2 below.

Table 2

| Class. | Difference (mol%) in nickel content between large secondary particles and small secondary particles | Heat treatment temperature (°C) |
|---|---|---|
| Example 3 | 14 | 660 |
| Example 4 | 14 | 680 |
| Example 5 | 14 | 700 |
| Example 6 | 14 | 740 |

**Example 7**

Nickel-based lithium metal composite oxide satisfying the conditions of Table 3 below was obtained in substantially the same manner as in Example 1, except that the large-particle nickel-based metal hydroxide ($Ni_{0.96}Co_{0.02}Alo_{0.02}(OH)_2$) of Preparation Example 3 was used instead of the large-particle nickel-based metal hydroxide having a particle diameter of about 12 μm of Preparation Example 1.

Table 3

| Class. | Large secondary particles | Small secondary particles | Mixing weight ratio of large secondary particles and small secondary particles | Difference (mol%) in nickel content between large secondary particles and small secondary particles |
|---|---|---|---|---|
| Example 7 | $LiNi_{0.96}Co_{0.02}Al_{0.02}O_2$ (Particle diameter: 12 μm) | $LiNi_{0.8}Co_{0.15}Al_{0.05}O_2$ (Particle diameter: 3 μm) | 8:2 | 16 |

**Example 8**

Nickel-based lithium metal composite oxide satisfying the conditions of Table 4 below was obtained in substantially the same manner as in Example 1, except that the large-particle nickel-based metal hydroxide of Preparation Example 4 and the small-particle nickel-based metal hydroxide of Preparation Example 2 were used.

**Example 9**

Nickel-based lithium metal composite oxide satisfying the conditions of Table 4 below was obtained in substantially the same manner as in Example 1, except that the large-particle nickel-based metal hydroxide of Preparation Example 5 and the small-particle nickel-based metal hydroxide of Preparation Example 2 were used.

**Example 10**

Nickel-based lithium metal composite oxide satisfying the conditions of Table 4 below was obtained in substantially the same manner as in Example 1, except that the small-particle nickel-based metal hydroxide of Preparation Example 6 were used.

**Example 11**

Nickel-based lithium metal composite oxide satisfying the conditions of Table 4 below was obtained in substantially the same manner as in Example 1, except that the small-particle nickel-based metal hydroxide of Preparation Example 7 were used.

Table 4

| Class. | Large secondary particles | Small secondary particles | Mixing weight ratio of large secondary particles and small secondary particles | Difference (mol%) in nickel content between large secondary particles and small secondary particles |
|---|---|---|---|---|
| Example 8 | $LiNi_{0.94}Co_{0.03}Al_{0.03}O_2$ (Particle diameter: about 10 $\mu$m) | $LiNi_{0.8}Co_{0.15}Al_{0.05}O_2$ (Particle diameter: about 3 $\mu$m) | 8:2 | 14 |
| Example 9 | $LiNi_{0.94}Co_{0.03}Al_{0.03}O_2$ (Particle diameter: about 17 $\mu$m) | $LiNi_{0.8}Co_{0.15}Al_{0.05}O_2$ (Particle diameter: about 3 $\mu$m) | 8:2 | 14 |
| Example 10 | $LiNi_{0.94}Co_{0.03}Al_{0.03}O_2$ (Particle diameter: about 12 $\mu$m) | $LiNi_{0.8}Co_{0.15}Al_{0.05}O_2$ (Particle diameter: about 2 $\mu$m) | 8:2 | 14 |
| Example 11 | $LiNi_{0.94}Co_{0.03}Al_{0.03}O_2$ (Particle diameter: about 12 $\mu$m) | $LiNi_{0.8}Co_{0.15}Al_{0.05}O_2$ (Particle diameter: about 5 $\mu$m) | 8:2 | 14 |

**Comparative Example 1**

Nickel-based lithium metal composite oxide was obtained in substantially the same manner as in Example 1, except that $Ni_{0.94}Co_{0.03}Al_{0.03}(OH)_2$ was used as the large-particle nickel-based metal hydroxide of Preparation Example 1 and $Ni_{0.96}Co_{0.02}Al_{0.02}(OH)_2$ of Preparation Example 3 was used as the small-particle nickel-based metal hydroxide.

**Comparative Example 2**

The large-particle nickel-based metal hydroxide powder of Preparation Example 1 was mixed with lithium hydroxide (LiOH) at a mixing molar ratio of 1:1.05 using a Henschel mixer in a dry state, and primarily heat-treated at about 740 °C for about 10 hours in an oxygen atmosphere to obtain nickel-based lithium metal composite oxide as large secondary particles. The D50 of the large secondary particles was about 12 $\mu$m.

Separately, the small-particle nickel-based metal hydroxide powder having a particle diameter of 3 μm of Preparation Example 2 was mixed with lithium hydroxide (LiOH) at a mixing molar ratio of 1:1.01 using a Henschel mixer in a dry state, and secondarily heat-treated at about 680 °C for about 10 hours in an oxygen atmosphere to obtain nickel-based lithium metal composite oxide as small secondary particles. The D50 of the small secondary particles was about 3 μm.

The large secondary particles and the small secondary particles were mixed at a mixing ratio of 80:20 and third heat-treated at about 700 °C to obtain nickel-based lithium metal composite oxide including large secondary particles and small secondary particles.

According to Comparative Example 2, heat treatment processes are required to be performed three times, and thus a lot of manufacturing cost and time are taken to obtain NCA. Therefore, it was difficult to apply this method practically.

**Manufacture of lithium secondary battery**

**Manufacture Example 1**

A lithium secondary battery was manufactured as follows using the nickel-based lithium metal composite oxide secondary particles obtained according to Example 1 as a positive electrode active material.

A mixture of 96 g of the nickel-based lithium metal composite oxide secondary particles obtained according to Example 1, 2 g of polyvinylidene fluoride, 47 g of N-methylpyrrolidone as a solvent, and 2 g of carbon black as a conductive agent was defoamed using a mixer to prepare a uniformly dispersed slurry for forming a positive electrode active material layer.

The slurry prepared according to the above process was applied on an aluminium foil using a doctor blade to form a thin electrode plate, and then this thin electrode plate was dried at 135 °C for 3 hours or more, rolled and dried in vacuum to prepare a positive electrode.

A 2032 type (kind) of coin cell was manufactured using the positive electrode and a lithium metal counter electrode as a counter electrode of the positive electrode. A separator (thickness: about 16 μm) made of a porous polyethylene (PE) film was interposed between the positive electrode and the lithium metal counter electrode, and an electrolyte was injected to manufacture a 2032 type (kind) of coin cell. In this case, as the electrolyte, a solution in which 1.1 M $LiPF_6$ is dissolved in a solvent in which ethylene carbonate (EC) and ethyl methyl carbonate (EMC) are mixed at a volume ratio of 3:5 was used.

The formation process for the coin cell manufactured according to the above process was carried out as follows.

In the first charge/discharge cycle, after the coin cell was paused for 10 hours, the coin cell was charged with a constant current of 0.2 C until a voltage reached 4.25 V, and was then charged with a constant voltage until a current reached 0.05 C. The completely charged coin cell was discharged at a constant current of 0.2 C until the voltage reached 3 V after a pause of about 10 minutes (1st cycle). Thereafter, in the second charge/discharge cycle, after the coin cell was paused for 10 hours, the coin cell was charged with a constant current of 0.2 C until a voltage reached 4.25 V, and was then charged with a constant voltage until a current reached 0.05 C. The completely charged coin cell was discharged at a constant current of 0.2 C until the voltage reached 3 V after a pause of about 10 minutes (2nd cycle).

**Manufacture Examples 2 to 11**

Lithium secondary batteries were manufactured in substantially the same manner as in Manufacture Example 1, except that respective ones of the nickel-based lithium metal composite oxides of Examples 2 to 11 were used instead of the nickel-based lithium metal composite oxide of Example 1.

**Comparative Manufacture Examples 1 and 2**

Lithium secondary batteries were manufactured in substantially the same manner as in Manufacture Example 1, except that respective ones of the nickel-based lithium metal composite oxides of Comparative Examples 1 and 2 were used instead of the nickel-based lithium metal composite oxide of Example 1.

**Evaluation Example 1: dQ/dV analysis**

In the coin cells manufactured in Manufacture Example 1 and Comparative Manufacture Examples 1 and 2, charge/discharge characteristics were evaluated by a charging/discharging machine (Model: TOYO-3100, manufactured by TOYO Corporation).

Processes of evaluating charge/discharge characteristics are described in more detail as follows.

Each of the coin cells was charged with a constant current of 1 C until a voltage reached 4.3 V, and was then charged with a constant voltage until a current reached 0.05 C. The completely charged coin cell was discharged at a constant current of 1 C until the voltage reached 3 V after a pause of about 10 minutes (1st cycle). These charge/discharge cycles were repeatedly carried out for a total of 50 cycles.

The ratio (A2/A1) of the discharge peak intensity (A2) to the charge peak intensity (A1) obtained by the dQ/dV charge/discharge differential curve distributions appearing in a voltage range of 4.1 V to 4.25 V after 1 cycle, 30 cycles, and 50 cycles was examined, and the results thereof are shown in Table 5 below and FIGS. 1 to 5.

The charge peak is a peak appearing at a voltage of 4.17 V to 4.25 V, and the discharge peak is a peak appearing at a voltage of 4.14 V to 4.17 V.

FIG. 1 is a graph illustrating dQ/dV charge/discharge differential curves after 1 cycle in the lithium secondary batteries of Manufacture Example 1 and Comparative Manufacture Examples 1 and 2, and FIG. 2 is a graph illustrating dQ/dV charge/discharge differential curves after 30 cycles in the lithium secondary batteries of Manufacture Example 1 and Comparative Manufacture Example 2.

FIG. 3 is a graph illustrating dQ/dV charge/discharge differential curves after 50 cycles in the lithium secondary batteries of Manufacture Example 1 and Comparative Manufacture Example 2, and FIG. 4 is a graph illustrating dQ/dV charge/discharge differential curves after 1 cycle, 30 cycles, and 50 cycles in the lithium secondary battery of Manufacture Example 1. FIG. 5 is a graph illustrating dQ/dV charge/discharge differential curves after 1 cycle, 30 cycles, and 50 cycles in the lithium secondary battery of Comparative Manufacture Example 2.

Table 5

| Class. | A2/A1 (@1$^{st}$cycle) | A2/A1 (@30$^{st}$ cycle) | A2/A1 (@50$^{st}$ cycle) | A2/A1 change rate (%) |
|---|---|---|---|---|
| Manufacture Example 1 | 1.29 | 1.15 | 1.14 | 11.62 |
| Comparative Manufacture Example 1 | 1.05 | 0.98 | 0.93 | 11.71 |
| Comparative Manufacture Example 2 | 0.93 | 0.96 | 0.82 | 11.8 |

Referring to FIGS. 1 to 5 and Table 5, the lithium secondary battery of Manufacture Example 1 is characterized in that the A2/A1 is 1.1 or more after 1 cycle, 30 cycles, 50 cycles, and in the lithium secondary batteries of Comparative Manufacture Examples 1 and 2, A2/A1 is less than 1.0 after 1 cycle, 30 cycles, 50 cycles. In the lithium secondary battery of Manufacture Example 1, an A2/A1 change rate was decreased as compared with the lithium secondary batteries of Comparative Manufacture Examples 1 and 2. The A2/A1 change rate refers to a ratio of A2/A1 after 50 cycles to A2/A1 after 1 cycle. It may be found from the decrease in the A2/A1 change rate that the structural change of the lithium secondary battery of Manufacture Example 1 due to deterioration after the charge/discharge cycle is small.

**Evaluation Example 2: X-ray diffraction analysis**

For the nickel-based lithium metal composite oxide of Example 1, X-ray diffraction analysis was performed using an X'Pert Pro (PANalytical) using Cu K$\alpha$ radiation (1.54056Å). The results of the X-ray diffraction analysis are shown in FIG 6.

Referring to FIG. 6, it may be found that the nickel-based lithium metal composite oxide of Example 1 forms an aligned layered structure without impurities (or without detectable levels of impurities).

**Evaluation Example 3: Charge/discharge efficiency and capacity retention rate**

In the coin cells manufactured according to Manufacture Examples 1 to 6 and Comparative Manufacture Example 1, the charging/discharging efficiency and capacity retention rate thereof were evaluated as follows using a charging/discharging machine (model: TOYO-3100, manufactured by TOYO Corporation).

**(1) Charge/ discharge efficiency**

Each of the coin cells was charged with a constant current of 0.2 C at 25 °C until a voltage reached 4.25 V, and was then charged with a constant voltage until a current reached 0.05 C. The completely charged coin cell was discharged to a constant current of 0.2 C until the voltage reached 3 V after a pause of about 10 minutes. These charge/discharge cycles were repeatedly carried out 50 times, and the charge/ discharge efficiency was evaluated.

**(2) Capacity retention rate**

Each of the coin cells was charged with a constant current of 1 C at 45 °C until a voltage reached 4.3 V, and was then charged with a constant voltage until a current reached 0.05 C. The completely charged coin cell was discharged to a constant current of 1 C until the voltage reached 3 V after a pause of about 10 minutes. These charge/discharge cycles were repeatedly carried out 50 times, and the capacity retention rate was evaluated.

The capacity retention rate (CRR) is calculated by Equation 1 below, and the initial charge/ discharge efficiency is calculated by Equation 2 below. The capacity retention rate characteristics and the initial charge/ discharge efficiency characteristics were evaluated, and the results thereof are shown in Table 6 below and FIG. 8. FIG. 8 shows the capacity retention rate characteristics of Manufacture Examples 1 and 2 and Comparative Manufacture Example 1.

Equation 1

Capacity retention rate [%] = [discharge capacity of 50$^{th}$cycle / discharge capacity of 1$^{st}$cycle] × 100

Equation 2

Initial Charge/ discharge efficiency = [discharge voltage of first cycle /charge voltage of first cycle] X100

Table 6

| Class. | Heat treatment temperature (°C) | Mixing ratio of large secondary particles and small secondary particles | Charge capacity (mAh/g) | Discharge capacity (mAh/g) | Charge/ discharge efficiency (%) | Capacity retention rate (@50 times) (%) |
|---|---|---|---|---|---|---|
| Manufacture Example 1 | 720 | 80:20 | 237.8 | 213.4 | 89.8 | 93.5 |
| Manufacture Example 2 | 720 | 90:10 | 236.5 | 210.9 | 89.2 | 91.2 |
| Manufacture Example 3 | 660 | 80:20 | 232.8 | 202.5 | 87.0 | 92 |
| Manufacture Example 4 | 680 | 80:20 | 232.4 | 203.9 | 87.7 | 92 |
| Manufacture Example 5 | 700 | 80:20 | 235.0 | 207.3 | 88.2 | 92 |
| Manufacture Example 6 | 740 | 80:20 | 233.8 | 203.6 | 87.1 | 92 |
| Comparative Manufacture Example 1 | 720 | 80:20 | - | - | 85 | 86 |

Referring to Table 6 and FIG. 8, it can be seen that the coin cells manufactured according to Manufacture Examples 1 to 6 exhibit improved capacity retention rate characteristics as compared with the coin cell of Comparative Manufacturing Example 1. Further, it can be seen that the coin cells of Manufacture Examples 1 to6 exhibit improved initial charge/discharge efficiency characteristics as compared with the coin cell of Comparative Manufacturing Example 1.

The coin cell of Comparative manufacture Example 2 exhibits excellent capacity retention rate characteristics. However, in the coin cell of Comparative manufacture Example 2, the positive electrode uses the nickel-based lithium metal composite oxide of Comparative Example 2 obtained by separately sintering large secondary particles and small secondary particles three times, thereby subjecting the nickel-based lithium metal composite oxide of Comparative Example 2 to heat treatment processes three times, and thus substantial manufacturing cost and time are required in the process of manufacturing the nickel-based lithium metal composite oxide of Comparative Example 2. Therefore, it is difficult to apply the method of Comparative Example 2 practically.

Further, the charge/discharge characteristics of the coin cells of Manufacture Examples 7 to 11 were evaluated in substantially the same manner as in the evaluation of charge/discharge characteristics of the coin cell of Manufacture Example 1.

As a result, the charge/discharge characteristics of the coin cells of Manufacture Examples 7 to 11 exhibit a similar level as compared with the charge/discharge characteristics of the coin cell of Manufacture Example 1.

**Evaluation Example 4: Charge/discharge characteristics**

In the coin cells of Manufacture Example 1 and Comparative Manufacture Example 1, charge/discharge characteristics were evaluated under the following conditions.

In the evaluation of charge/discharge characteristics, each of the coin cells was charged with a constant current of 0.2 C at 25 °C until a voltage reached 4.25 V, and was then charged with a constant voltage until a current reached 0.05 C. The completely charged coin cell was discharged at a constant current of 0.2 C until the voltage reached 3 V after a pause of about 10 minutes.

The evaluation results thereof are shown in FIG. 9.

As shown in FIG. 9, the charge/discharge characteristics of the coin cell of Manufacture Example 1 were improved as compared with the charge/discharge characteristics of the coin cell of Comparative Manufacture Example 1.

A nickel-based lithium metal composite oxide according to an embodiment of the present disclosure has excellent structural stability. When a positive electrode including such a nickel-based lithium metal composite oxide is provided, a lithium secondary battery having improved lifetime characteristics and high-rate characteristics may be manufactured.

It should be understood that the embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims, and equivalents thereof.

**Claims**

**1.** A nickel-based lithium metal composite oxide comprising:

secondary particles including aggregates of primary particles,
wherein a content of nickel in the nickel-based lithium metal composite oxide is 50 mol% or more, based on a total content of transition metals in the nickel-based lithium metal composite oxide,
the secondary particles comprise large secondary particles having a particle size of 10 μm or more and small secondary particles having a particle size of 5 μm or less, and
a content of nickel in the large secondary particles is larger than a content of nickel in the small secondary particles.

**2.** A nickel-based lithium metal composite oxide of claim 1, wherein, in a differential capacity (dQ/dV) charge/discharge differential curve of a lithium secondary battery having a positive electrode comprising the nickel-based lithium metal composite oxide, a ratio (A2/A1) of a discharge peak intensity (A2) to a charge peak intensity (A1), appearing at a voltage of 4.1 V to 4.25 V and a current of 1 C, is 1.1 or more.

**3.** A nickel-based lithium metal composite oxide of claim 2, wherein:

(i) the charge peak is a peak appearing at a voltage of 4.17 V to 4.25 V, and the discharge peak is a peak appearing at a voltage of 4.14 V to 4.17 V; and/or
(ii) the ratio (A2/A1) of the discharge peak intensity (A2) to the charge peak intensity (A1) is 1.1 to 1.5.

**4.** A nickel-based lithium metal composite oxide of any one of claims 1 to 3, wherein a difference between the content of nickel in the large secondary particles and the content of nickel in the small secondary particles is 10 mol% or more.

5. A nickel-based lithium metal composite oxide of any one of claims 1 to 4, wherein:

(i) the content of nickel in the large secondary particles is 85 mol% to 99 mol% based on the total content of transition metals in the large secondary particles; and/or
(ii) the content of nickel in the small secondary particles is 75 mol% to 89 mol% based on the total content of transition metals in the large secondary particles.

6. A nickel-based lithium metal composite oxide of any one of claims 1 to 5, wherein:

(i) the large secondary particles have a particle size of 10 μm to 17 μm; and/or
(ii) the small secondary particles have a particle size of 2 μm to 5 μm.

7. A nickel-based lithium metal composite oxide of any one of claims 1 to 6, wherein the content of the large secondary particles is 30 parts by weight to 90 parts by weight based on 100 parts by weight of the total content of the large secondary particles and the small secondary particles.

8. A nickel-based lithium metal composite oxide of any one of claims 1 to 7, wherein the nickel-based lithium metal composite oxide is a compound represented by Formula 1:

Formula 1 $Li_a(Ni_{1-x-y-z}Co_xM_yM'_z)O_2$

wherein, in Formula 1, M is manganese (Mn), aluminum (Al), or a combination thereof,

M' is boron (B), magnesium (Mg), calcium (Ca), strontium (Sr), barium (Ba), titanium (Ti), vanadium (V), chromium (Cr), iron (Fe), copper (Cu), zirconium (Zr), or a combination thereof, and
$0.95 \leq a \leq 1.3$, $0<x<0.5$, $0<y<0.5$, $0 \leq z<0.5$, and $0<x+y+z \leq 0.5$ are satisfied, optionally wherein:
the large secondary particles comprise a compound satisfying $0.88 \leq (1-x-y-z) \leq 0.95$, $0.01 \leq x \leq 0.08$, $0.001 \leq y \leq 0.05$, $0 \leq z \leq 0.01$, and $0<x+y+z \leq 0.5$ in Formula 1, and
the small secondary particles comprise a compound satisfying $0.75 \leq (1-x-y-z) \leq 0.85$, $0.01 \leq x \leq 0.05$, $0.001 \leq y \leq 0.05$, $0 \leq z \leq 0.01$, and $0<x+y+z \leq 0.5$ in Formula 1.

9. A nickel-based lithium metal composite oxide of any one of claims 1 to 8, wherein the large secondary particles comprise a compound represented by Formula 1-1:

Formula 1-1 $Li_a(Ni_{1-x-y-z}Co_xAl_yM_z)O_2$

wherein, in Formula 1-1, M is boron (B), magnesium (Mg), calcium (Ca), strontium (Sr), barium (Ba), titanium (Ti), vanadium (V), chromium (Cr), iron (Fe), copper (Cu), zirconium (Zr), or a combination thereof, and
$0.95 \leq a \leq 1.3$, $0.88 \leq (1-x-y-z) \leq 0.96$, $0.01 \leq x \leq 0.08$, $0.001 \leq y \leq 0.05$, and $0 \leq z \leq 0.01$ are satisfied.

10. A nickel-based lithium metal composite oxide of any one of claims 1 to 9, wherein:
the small secondary particles comprise a compound represented by Formula 1-2:

Formula 1-2 $Li_a(Ni_{1-x-y-z}Co_xAl_yM_z)O_2$

wherein, in Formula 1-2, M is boron (B), magnesium (Mg), calcium (Ca), strontium (Sr), barium (Ba), titanium (Ti), vanadium (V), chromium (Cr), iron (Fe), copper (Cu), zirconium (Zr), or a combination thereof, and
$0.95 \leq a \leq 1.3$, $0.75 \leq (1-x-y-z) \leq 0.85$, $0.01 \leq x \leq 0.05$, $0.001 \leq y \leq 0.05$, and $0 \leq z \leq 0.01$ are satisfied.

11. A method of preparing a nickel-based lithium metal composite oxide, the method comprising:

mixing a large-particle nickel-based metal hydroxide having a nickel content of 50 mol% or more, based on the total content of transition metals in the large-particle nickel-based metal hydroxide, small-particle nickel-based metal hydroxide having a nickel content of 50 mol% or more, based on the total content of transition metals in the small-particle nickel-based metal hydroxide and a lithium precursor to obtain a precursor mixture; and
heat-treating the precursor mixture to obtain the nickel-based lithium metal composite oxide of claim 1.

12. A method of claim 11, wherein the heat-treating of the precursor mixture is performed at a temperature of 650 °C to 800 °C.

**13.** A method of claim 11 or claim 12, wherein the large-particle nickel-based metal hydroxide has a higher nickel content than the small-particle nickel-based metal hydroxide, and a difference between the nickel content of the large-particle nickel-based metal hydroxide and the nickel content of the small-particle nickel-based metal hydroxide is 10 mol% or more.

**14.** A method of any one of claims 11 to claim 13, wherein:

(i) the content of nickel in the large-particle nickel-based metal hydroxide is 85 mol% to 99 mol% based on the total content of transition metals in the large-particle nickel-based metal hydroxide, and
the content of nickel in the small-particle nickel-based metal hydroxide is 75 mol% to 89 mol% based on the total content of transition metals in the small-particle nickel-based metal hydroxide; and/or
(ii) the lithium precursor comprises lithium hydroxide, lithium fluoride, lithium carbonate, $Li_2COOH$, or a mixture thereof.

**15.** A lithium secondary battery comprising: a positive electrode comprising the nickel-based lithium metal composite oxide of any one of claims 1 to 10; a negative electrode; and an electrolyte interposed between the positive electrode and the negative electrode.

FIG. 1

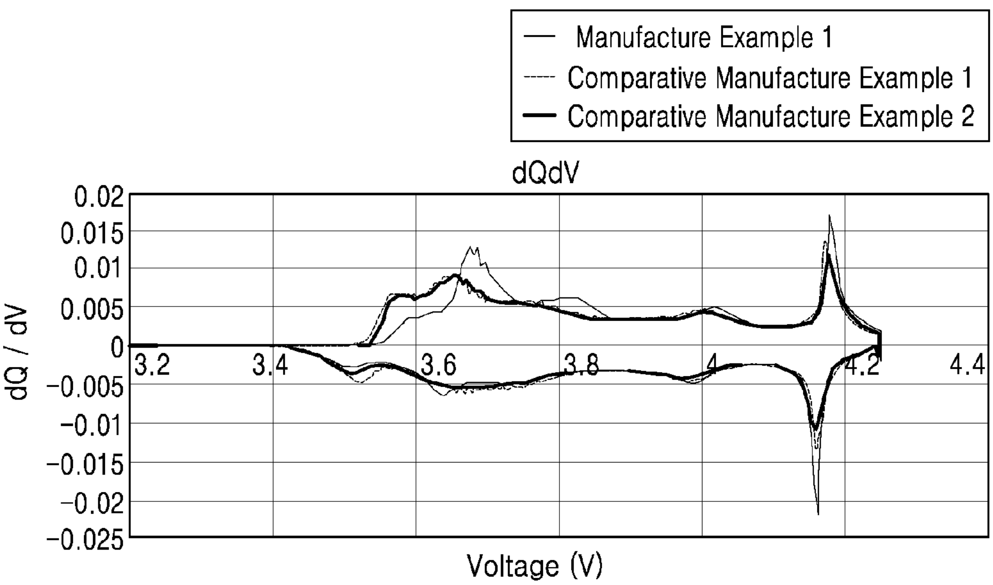
Manufacture Example 1
Comparative Manufacture Example 1
Comparative Manufacture Example 2
dQdV
0.02
0.015
0.01
0.005
0
-0.005
-0.01
-0.015
-0.02
-0.025
dQ / dV
3.2
3.4
3.6
3.8
4
4.2
4.4
Voltage (V)

FIG. 2

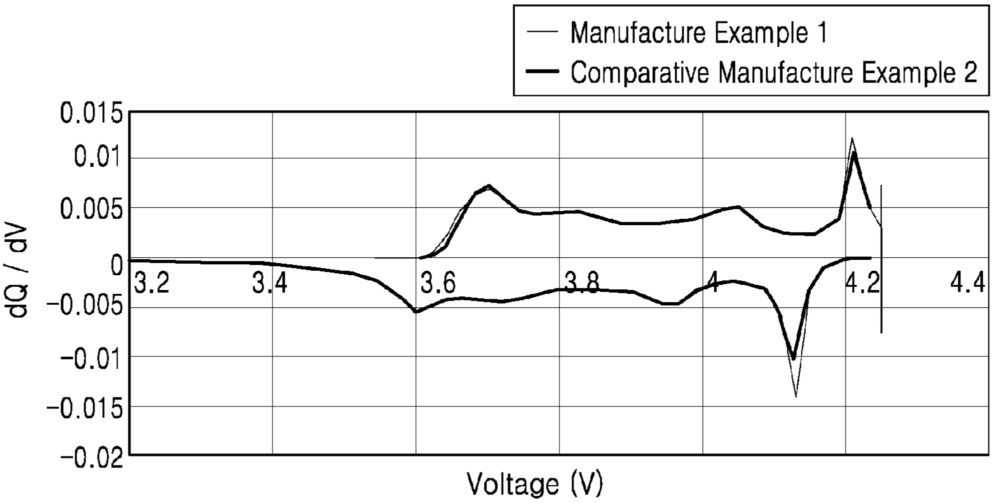
Manufacture Example 1
Comparative Manufacture Example 2
0.015
0.01
0.005
0
−0.005
−0.01
−0.015
−0.02
dQ / dV
3.2
3.4
3.6
3.8
4
4.2
4.4
Voltage (V)

FIG. 3

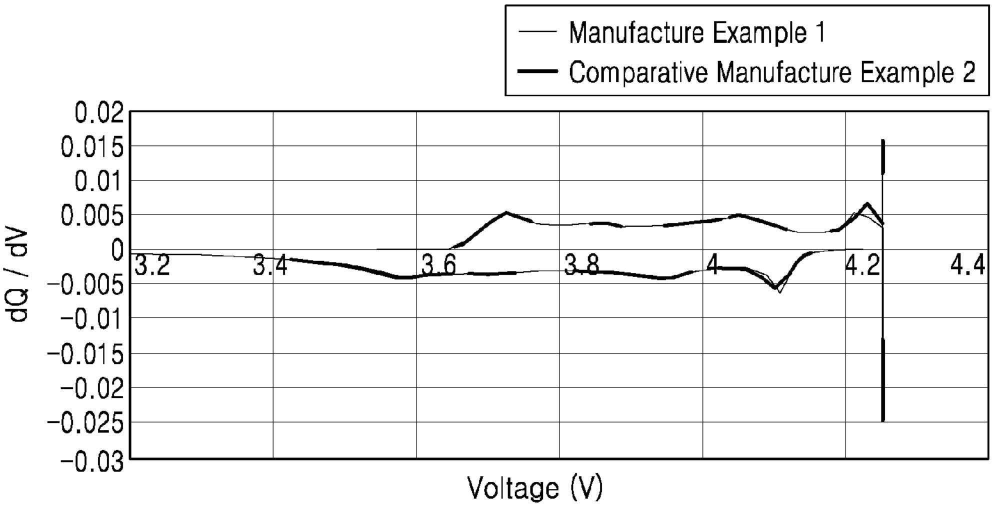
Manufacture Example 1
Comparative Manufacture Example 2
0.02
0.015
0.01
0.005
0
-0.005
-0.01
-0.015
-0.02
-0.025
-0.03
dQ / dV
3.2
3.4
3.6
3.8
4
4.2
4.4
Voltage (V)

# FIG. 4

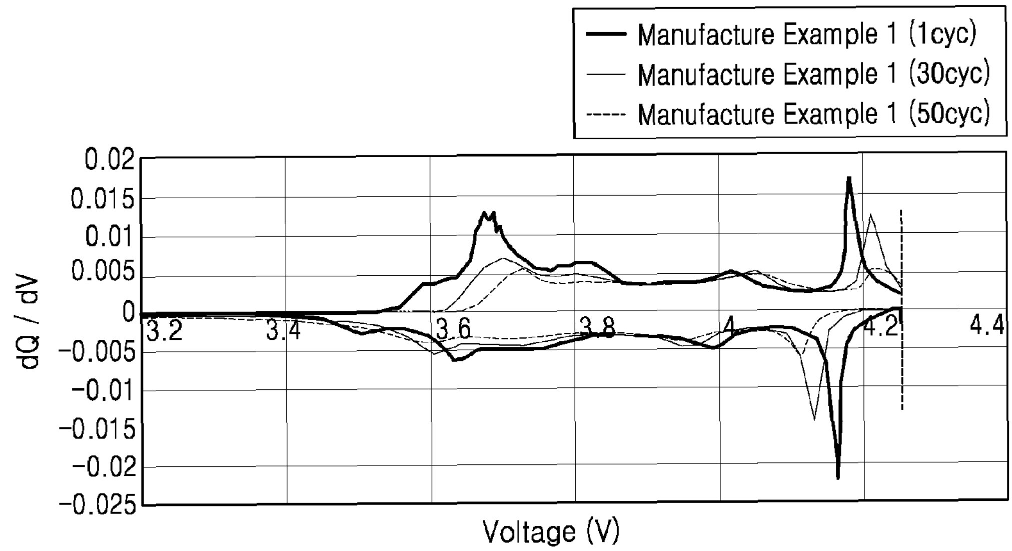
Manufacture Example 1 (1cyc)
Manufacture Example 1 (30cyc)
Manufacture Example 1 (50cyc)
0.02
0.015
0.01
0.005
0
-0.005
-0.01
-0.015
-0.02
-0.025
dQ / dV
3.2
3.4
3.6
3.8
4
4.2
4.4
Voltage (V)

FIG. 5

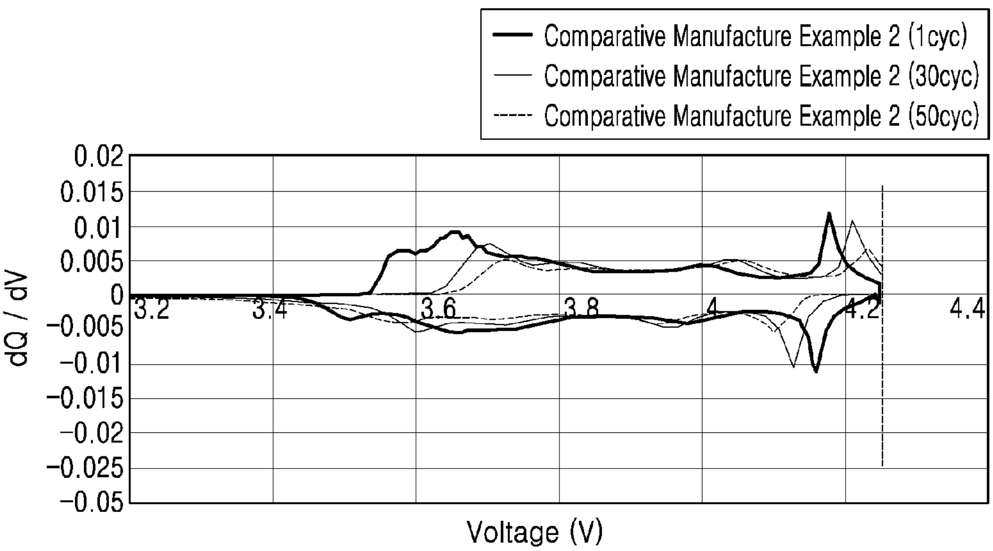
Comparative Manufacture Example 2 (1cyc)
Comparative Manufacture Example 2 (30cyc)
Comparative Manufacture Example 2 (50cyc)
0.02
0.015
0.01
0.005
0
-0.005
-0.01
-0.015
-0.02
-0.025
-0.05
dQ / dV
3.2
3.4
3.6
3.8
4
4.2
4.4
Voltage (V)

FIG. 6

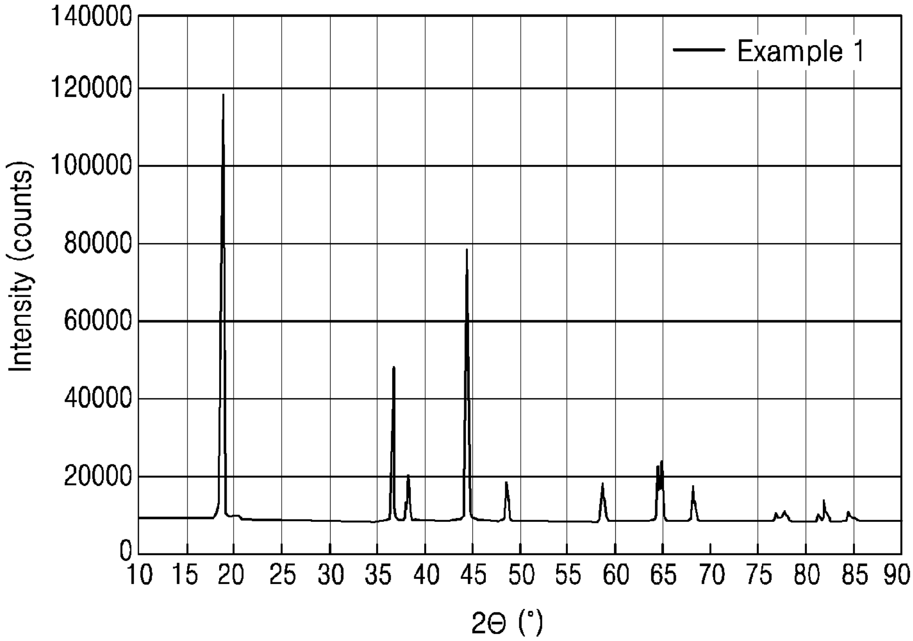
Example 1
Intensity (counts)
140000
120000
100000
80000
60000
40000
20000
0
10 15 20 25 30 35 40 45 50 55 60 65 70 75 80 85 90
2Θ (°)

FIG. 7

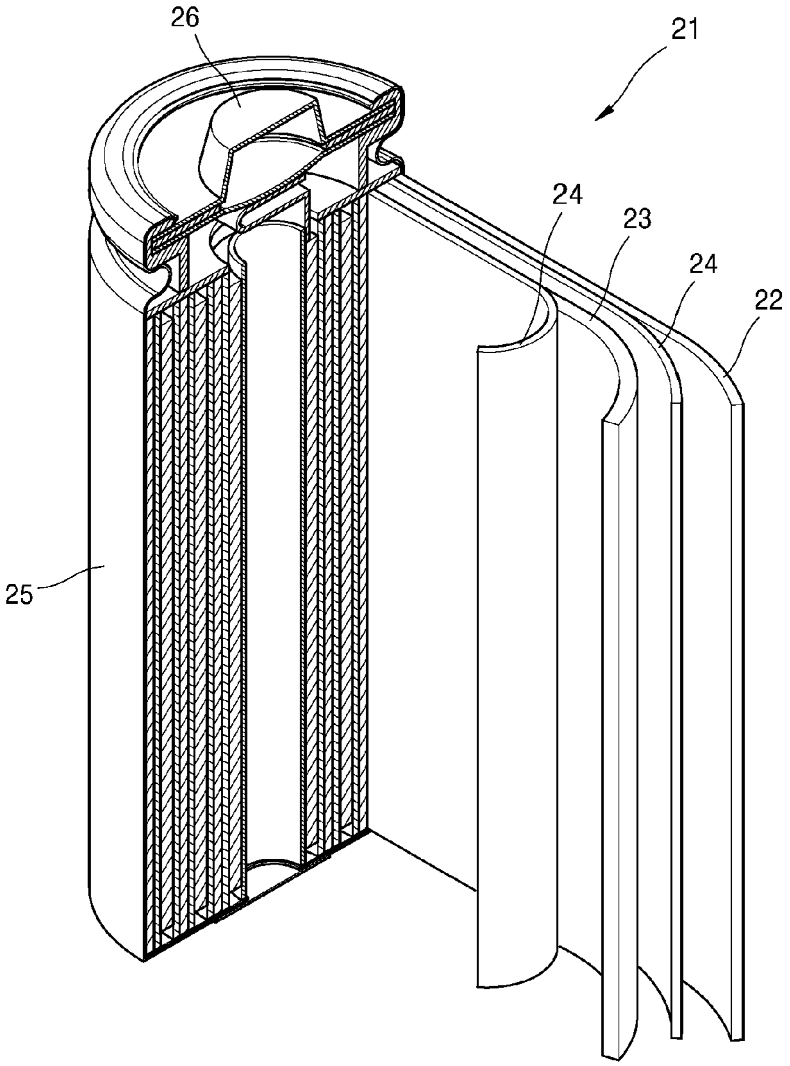

FIG. 8

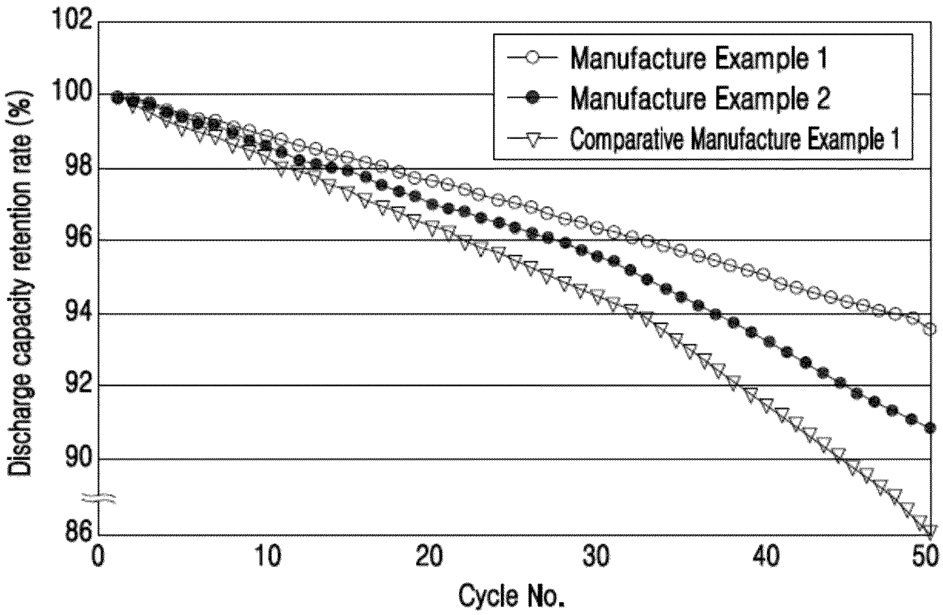
Manufacture Example 1
Manufacture Example 2
Comparative Manufacture Example 1
Discharge capacity retention rate (%)
102
100
98
96
94
92
90
86
0
10
20
30
40
50
Cycle No.

FIG. 9

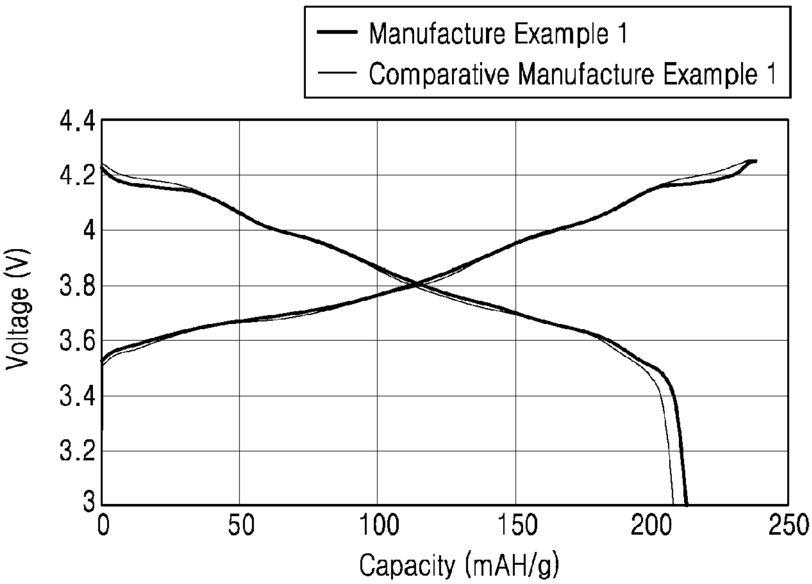
Manufacture Example 1
Comparative Manufacture Example 1
4.4
4.2
4
3.8
3.6
3.4
3.2
3
Voltage (V)
0
50
100
150
200
250
Capacity (mAH/g)